# EUROPÄISCHE PATENTSCHRIFT

(11) **EP 2 436 456 B1**
(45) Veröffentlichungstag und Bekanntmachung des Hinweises auf die Patenterteilung: **23.08.2017**
(21) Anmeldenummer: 11182669.9
(22) Anmeldetag: 26.09.2011
(51) Int. Cl.: B21K 1/76, B21K 23/00, F16B 43/00

(54) **Getriebe-Distanzscheibe und Verfahren zu deren Herstellung**
Spacer washer for a transmission and method for its production
Rondelle d'écartement pour transmission et son procédé de fabrication

(30) Priorität: 29.09.2010 DE 102010047848
(43) Veröffentlichungstag der Anmeldung: 04.04.2012
(73) Patentinhaber: GETRAG B.V. & Co. KG, 74199 Untergruppenbach (DE)
(72) Erfinder: Palme, Andreas, 74081 Heilbronn (DE); Nicklaß, Oliver, 76709 Kronau (DE)
(74) Vertreter: Witte, Weller & Partner Patentanwälte mbB

(56) Entgegenhaltungen:
- WO-A1-00/75521
- DE-A1- 4 440 085
- DE-A1- 10 203 265
- DE-A1- 19 902 565
- DE-A1-102008 054 242
- DE-C1- 4 032 602
- US-A- 5 794 484
- US-A1- 2004 057 813
- US-B2- 7 384 360

## Beschreibung

Die vorliegende Erfindung betrifft ein Verfahren zum Herstellen einer Getriebe-Distanzscheibe mit einer vorbestimmten Dicke, mit den Schritten, eine Rohscheibe bereitzustellen und anschließend zum Herstellen der Distanzscheibe zu bearbeiten, damit die Distanzscheibe die vorbestimmte Dicke erhält.

Ferner betrifft die vorliegende Erfindung eine derartige Getriebe-Distanzscheibe sowie ein Getriebe mit einer Welle, an der eine solche Distanzscheibe angeordnet ist.

Distanz-, Anlauf- und Passscheiben (im Folgenden insgesamt mit "Distanzscheibe" bezeichnet), werden in aller Regel zur Verwendung in Getrieben aus metallischen Werkstoffen hergestellt. Die Distanzscheiben müssen dabei zur Verwendung in solchen Getrieben mit engen Toleranzen gefertigt werden.

Es ist im Stand der Technik bekannt, derartige Distanzscheiben aus einem Blech auszustanzen. Da die Bleche in der Regel nur mit einer relativ großen Dickentoleranz bereitgestellt werden können, werden die auf diese Weise hergestellten Rohscheibe anschließend spanend bearbeitet, um die geforderte Dickentoleranz zu erreichen. Der Fertigungsaufwand ist hierbei relativ hoch.

Alternativ hierzu ist es auch denkbar, das Blech von vornherein mit der gewünschten Dickentoleranz bereitzustellen. Bleche mit derartigen Toleranzen sind jedoch teuer in der Herstellung.

Bei Distanzscheiben, wie sie in Getrieben verwendet werden, ist ferner der Fluss von Schmiermittel von besonderer Bedeutung. Aus dem Dokument EP 1 183 746 B1 ist es daher beispielsweise bekannt, auf einer Seite einer Anlaufscheibe Vertiefungen vorzusehen, die radiale Ölaustrittsöffnungen bilden.

Aus dem Dokument DE 10 2008 054 242 A1 ist es ferner bekannt, ein bogenförmiges Gleitlagerelement mit einer im Wesentlichen ebenen Scheibenform aus einem streifenförmigen Flachmaterialabschnitt herzustellen. Der Flachmaterialabschnitt wird dabei im Querschnitt trapezförmig bereitgestellt. Durch einen anschließenden Biegevorgang erhält das Gleitlagerelement aufgrund der Streckung im Bereich des Außendurchmessers eine nahezu gleichförmige Dicke.

Aus dem Dokument DE 199 02 565 A1 ist ein Verfahren zum Herstellen einer Getriebe-Distanzscheibe bekannt, wobei die Distanzscheibe aus Blech gestanzt wird und wobei die Strukturen der Oberfläche durch Prägen eingebracht werden. Eine Getriebe-Distanzscheibe gemäß dem Oberbegriff des Anspruchs 7 ist ebenfalls aus der Druckschrift DE 199 02 565 A1 bekannt. Die Distanzscheibe umgreift den Außenumfang eines Planetenbolzens und ist mittig zur Mittelachse des Bolzens ausgerichtet. Die anlaufscheibe ist axial auf einem Planetenrad angeordnet. Die Scheibe hat eine axiale Anlauffläche, die eine Beölungsnut aufweist. Das Planetenrad wird durch mindestens ein Lager auf dem Bolzen drehbar gelagert. Zumindest eine erste Kontaktzone der Scheibe weist Schmiertaschen auf.

Vor dem obigen Hintergrund ist es eine Aufgabe der Erfindung, ein verbessertes Verfahren zum Herstellen einer Getriebe-Distanzscheibe, eine verbesserte Getriebe-Distanzscheibe sowie ein Getriebe mit einer solchen Distanzscheibe anzugeben, wobei die Distanzscheibe kostengünstig herstellbar ist.

Die obige Aufgabe wird gelöst durch ein Verfahren zum Herstellen einer Getriebe-Distanzscheibe mit einer vorbestimmten Dicke, mit den Schritten, eine Rohscheibe bereitzustellen und anschließend zum Herstellen der Distanzscheibe zu bearbeiten, damit die Distanzscheibe die vorbestimmte Dicke erhält, wobei die Rohscheibe eine geringere Dicke als die vorbestimmte Dicke aufweist, wobei wenigstens von einer Seite der Rohscheibe wenigstens eine axiale Vertiefung eingedrückt wird, die gegenüber der anderen Seite als Erhebung vorsteht, derart, dass die Distanz zwischen der einen Seite der Distanzscheibe und der Erhebung auf der anderen Seite der Distanzscheibe mindestens der vorbestimmten Dicke entspricht, und wobei die Rohscheibe nach dem Eindrücken der wenigstens einen axialen Vertiefung einem axialen Pressvorgang unterzogen wird, damit die Distanz zwischen der einen Seite der Distanzscheibe und der Erhebung auf der anderen Seite der Distanzscheibe genau der vorbestimmten Dicke entspricht.

Ferner wird die obige Aufgabe gelöst durch eine Getriebe-Distanzscheibe mit wenigstens einer axialen Vertiefung, die an einer Seite ausgebildet ist und gegenüber der anderen Seite der Distanzscheibe als Erhebung vorsteht, wobei eine vorbestimmte Dicke der Distanzscheibe durch die Distanz zwischen der einen Seite der Distanzscheibe und der Erhebung auf der anderen Seite der Distanzscheibe gebildet ist.

Schließlich wird die obige Aufgabe gelöst durch ein Getriebe mit einer Welle, an der eine Distanzscheibe angeordnet ist, sowie durch die Verwendung einer erfindungsgemäßen Distanzscheibe in einem Kraftfahrzeuggetriebe.

Bei dem erfindungsgemäßen Verfahren ist es möglich, die Rohscheibe aus einem Blech mit einer relativ großen Dickentoleranz bereitzustellen. In dem anschließenden Umformungsvorgang, bei dem die wenigstens eine axiale Vertiefung in die Distanzscheibe gedrückt wird, kann die geforderte Dickentoleranz für die Distanzscheibe auf kostengünstige Art und Weise bereitgestellt werden.

Dadurch, dass sich auf der anderen Seite der Distanzscheibe wenigstens eine Erhebung ergibt, kann zudem der Fluss bzw. die Zufuhr von Schmierstoff im Bereich dieser Seite verbessert werden.

Die Ausgestaltung der Vertiefungen und die Einstellung der Höhe der Erhebung auf der anderen Seite können durch Auswahl einer geeigneten Matrize eines Umformwerkzeuges erfolgen.

Die Bearbeitung der ausgestanzten Rohscheibe zum Erzielen der vorbestimmten Dicke kann generell in einem Arbeitsgang erfolgen. Bspw. kann in der Matrize eine einem Stempel gegenüberliegende Vertiefung vorgesehen sein, wobei die Tiefe der Vertiefung in der Matrize zur Herstellung der vorbestimmten Dicke eingerichtet ist. Alternativ oder zusätzlich ist es auch möglich, die Seite, von der die Vertiefung axial eingedrückt wird, mittels eines Niederhalters zu fixieren, um die vorbestimmte Dicke zwischen einer Stirnseite des Niederhalters und einem Boden der matrizenseitigen Vertiefung einzustellen. Die vorbestimmte Dicke der Distanzscheibe kann auf diese Weise eingestellt bzw. kalibriert werden.

Die Rohscheibe ist vorzugsweise aus einem Metallmaterial wie Stahl hergestellt und ist vorzugsweise ungehärtet.

Die Aufgabe wird auf diese Weise vollkommen gelöst.

Wie oben erläutert, kann der Vorgang des Eindrückens der Vertiefungen gleichzeitig zum Erzielen der vorbestimmten Dicke eingerichtet werden.

Bei dieser Ausführungsform ist die resultierende Dicke nach dem Eindrücken der Vertiefungen vorzugsweise größer als die vorbestimmte Dicke. Die vorbestimmte Dicke bzw. Kalibrierung wird dann anschließend durch den Pressvorgang erzielt. Dabei können das Eindrücken und das Pressen in einem Umformwerkzeug erfolgen.

Von besonderem Vorzug ist es, wenn in dem Bearbeitungsschritt eine Mehrzahl von Vertiefungen eingedrückt werden.

Hierdurch kann die Stabilität der Distanzscheibe erhöht werden.

Von besonderem Vorzug ist es dabei, wenn die Vertiefungen über den Umfang der Distanzscheibe verteilt angeordnet sind.

Auf diese Weise kann eine Distanzscheibe mit einer vorbestimmten Dicke hergestellt werden, die über den Umfang der Distanzscheibe einheitlich ist.

Gemäß einer bevorzugten Ausführungsform ist wenigstens eine Vertiefung von einem Innenumfang und/oder von einem Außenumfang der Distanzscheibe beabstandet angeordnet.

Bei dieser Ausführungsform kann das Umformwerkzeug einfach konstruiert werden. Insbesondere auf der Seite der Erhebungen ist dabei ein verbesserter Fluss von Schmierstoff realisierbar.

Dabei kann die Distanzscheibe vorzugsweise als abgesetzte Scheibe ausgebildet sein, bei der die Vertiefung als Ringvertiefung benachbart zu einem Durchmesser (Außen oder Innen) ausgebildet ist.

Gemäß einer alternativen Ausführungsform erstreckt sich wenigstens eine Vertiefung in radialer Richtung von einem Innenumfang bis zu einem Außenumfang der Distanzscheibe.

Bei dieser Ausführungsform ergeben sich auf beiden Seiten der Vertiefung radial durchgehende Erhebungen (auf der anderen Seite sind dies die Abschnitte zwischen der Erhebung). Hierdurch ist ein verbesserter Fluss von Schmiermittel auf beiden Seiten der Distanzscheibe realisierbar.

Insgesamt ist es von Vorzug, wenn die Rohscheibe bereitgestellt wird, indem sie aus einem Blech ausgestanzt wird.

Das Blech kann hierbei vorzugsweise ein Standardblech sein, das mit relativ großen Dickentoleranzen gefertigt ist.

Die Vertiefungen können konzentrisch zur Distanzscheibe angeordnet sein, exzentrisch hierzu, und/oder können radial verlaufen. Die Formgebung kann vorzugsweise so sein, dass eine Schmiermittelversorgung bzw. ein Schmiermittelfluss optimiert werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Bleches und eines Stanzwerkzeuges;
- Fig. 2: eine schematische Darstellung einer hergestellten Rohscheibe;
- Fig. 3: eine schematische Darstellung eines ersten Umformwerkzeuges;
- Fig. 4: eine schematische Darstellung einer Rohscheibe mit Vertiefungen und Erhebungen;
- Fig. 5: schematische Darstellung eines zweiten Umformwerkzeuges zur Herstellung der erfindungsgemäßen Distanzscheibe;
- Fig. 6: einen Ausschnitt aus einem Getriebe eines Kraftfahrzeuges mit einer erfindungsgemäßen Distanzscheibe;
- Fig. 7: einen weiteren Ausschnitt aus einem Getriebe eines Kraftfahrzeuges mit einer erfindungsgemäßen Distanzscheibe;
- Fig. 8: eine schematische Draufsicht auf die Distanzscheibe der Fig. 5;
- Fig. 9: eine schematische Draufsicht einer alternativen Ausführungsform einer erfindungsgemäßen Distanzscheibe;
- Fig. 10: eine schematische Draufsicht einer weiteren alternativen Ausführungsform einer erfindungsgemäßen Distanzscheibe; und
- Fig. 11: eine schematische Schnittansicht einer weiteren alternativen Ausführungsform einer erfindungsgemäßen Distanzscheibe.

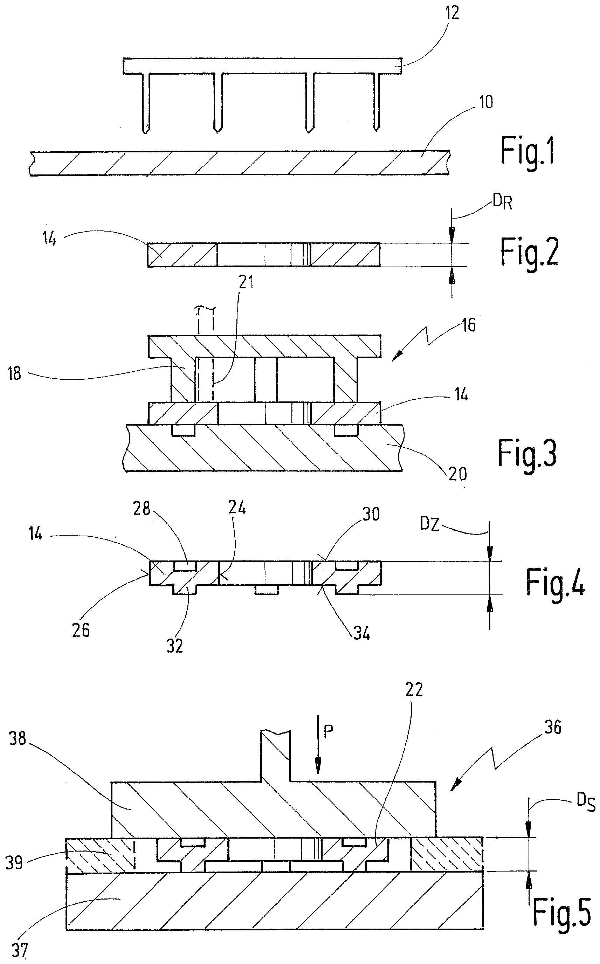

In den Fig. 1 bis 4 ist in schematischer Form ein Verfahren zum Herstellen einer Getriebe-Distanzscheibe gezeigt. Dabei zeigt Fig. 1 die Bereitstellung eines Bleches 10 aus einem metallischen Werkstoff wie Stahl sowie ein Stanzwerkzeug 12, mittels dessen eine Rohscheibe 14 aus dem Blech 10 ausstanzbar ist.

Fig. 2 zeigt eine auf diese Weise hergestellte Rohscheibe 14 im Querschnitt. Die Rohscheibe 14 ist dabei vorzugsweise kreisförmig, mit einer konzentrischen Durchgangsöffnung, beispielsweise zur Aufnahme einer Welle. Die Rohscheibe 14 weist eine Dicke D_{R} auf, die relativ großen Toleranzen unterliegen kann.

Fig. 3 zeigt einen ersten Schritt des Umformens der Rohscheibe 14 in einem ersten Umformwerkzeug 16. Das erste Umformwerkzeug 16 weist einen Stempel 18 sowie eine Matrize 20 auf, auf der die Rohscheibe 14 angeordnet wird. Bei 21 ist ferner ein optionaler Niederhalter 21 gezeigt. Das Umformwerkzeug 16 dient dazu, auf einer Seite der Rohscheibe 14 axiale Vertiefungen einzudrücken, die gegenüber der anderen Seite als Erhebung vorstehen. Zu diesem Zweck können in der Matrize 20 nicht näher bezeichnete Vertiefungen ausgebildet sein.

Fig. 4 zeigt eine auf diese Weise umgeformte Rohscheibe 14, die einen Innenumfang 24 und einen Außenumfang 26 aufweist. Im Bereich zwischen dem Innenumfang 24 und dem Außenumfang 26 ist eine Mehrzahl von Vertiefungen 28 in eine erste Seite 30 eingedrückt. Auf der zweiten Seite 34 ergeben sich an diesen Stellen entsprechende Erhebungen 32. Die Gesamtdicke der umgeformten Rohscheibe 14 ist in Fig. 4 bei D_{z} eingezeichnet. Die Gesamtdicke Dz_{z} bestimmt sich durch eine Distanz zwischen der ersten Seite 30 der Rohscheibe 14 und der Oberseite der Erhebungen 32. Die Dicke D_{z} ist größer als die Dicke D_{R} der ausgestanzten Rohscheibe 14 der Fig. 2. Die Dicke D_{z} ist mindestens so groß und vorzugsweise größer als die eine vorbestimmte Dicke, auf die die Rohscheibe in einem folgenden Schritt umzuformen (zu kalibrieren) ist. Ferner unterliegt die Dicke D_{z} in diesem Stadium noch immer den großen Toleranzen des Standardbleches 10.

Fig. 5 zeigt ein weiteres Umformwerkzeug 36 in Form einer Presse. Das Umformwerkzeug weist eine flächige Matrize 37 und einen flächigen Stempel 38 auf, zwischen denen die umgeformte Rohscheibe 14 angeordnet wird. Das weitere Umformwerkzeug 36 dient zum Erzielen der vorbestimmten Dicke Ds (zur Kalibrierung). Das weitere Umformwerkzeug 36 kann mit dem ersten Umformwerkzeug 16 integriert sein, so dass ein Umspannen nicht erforderlich ist. Die vorbestimmte Dicke Dₛ ist unabhängig von den großen Toleranzen des Standardbleches 10.

In dem weiteren Umformwerkzeug 36 kann ein Kalibrierblock 39 vorgesehen sein, der die vorbestimmte Dicke Dₛ vorgibt; dieser kann auch mit der Matrize 37 oder dem Stempel 38 integriert sein.

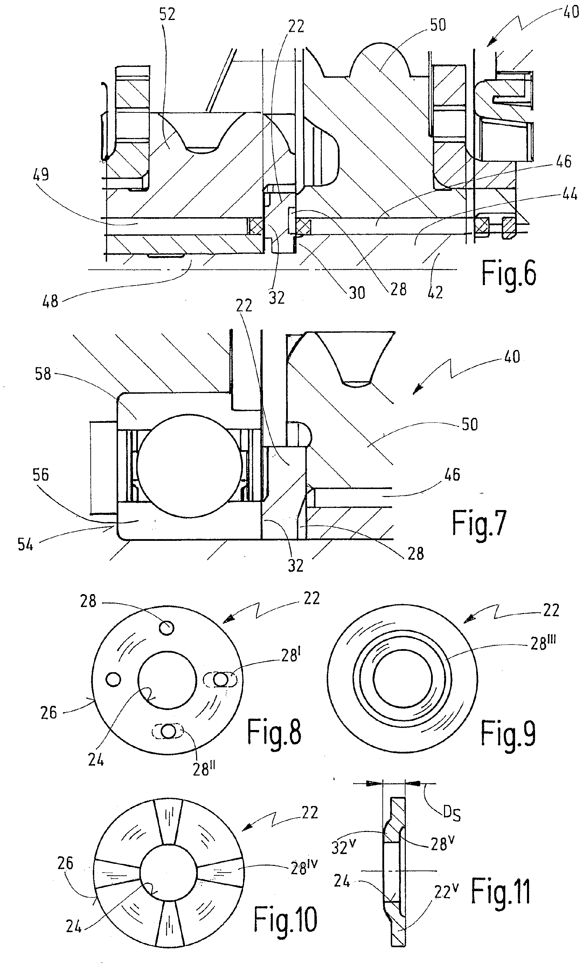

Fig. 6 zeigt einen schematischen Ausschnitt aus einem Getriebe 40 für ein Kraftfahrzeug. Das Getriebe 40 weist eine Welle 42 mit einem ersten Wellenabschnitt 44 auf. Der erste Wellenabschnitt 44 weist an seinem Umfang ein Lager 46 (beispielsweise ein Nadelllager) auf. Die Welle 42 beinhaltet ferner einen zweiten, an den ersten Wellenabschnitt 44 anschließenden Wellenabschnitt 48. Der zweite Wellenabschnitt 48 weist an seinem Umfang ein zweites Lager 49 auf. Auf das Lager 46 des ersten Wellenabschnittes 44 ist ein erstes Losrad 50 aufgesteckt. Auf das Lager 49 des zweiten Wellenabschnittes 48 ist ein zweites Losrad 52 aufgesteckt.

Zwischen den zwei Losrädern 50, 52 ist eine Distanzscheibe 22 der in Fig. 5 gezeigten Art angeordnet.

Man erkennt in Fig. 6, dass die Distanzscheibe 22 mit ihrer ersten Seite 30 an dem ersten Losrad 50 anliegt. Ferner liegen die Oberseiten der Erhebungen 32 an dem zweiten Losrad 52 an. Es ist ferner zu erkennen, dass zwischen der zweiten Seite 34 und dem zweiten Losrad 52 ein Zwischenraum vorhanden ist, über den Schmiermittel gefördert werden kann, beispielsweise über eine durch die Welle 42 verlaufende (nicht dargestellte) Zentralschmierung.

Fig. 7 zeigt inen schematischen Auschnitt aus einem weiteren Getrieb 40. Hierbei ist eine alternative Distanzscheibe 22 zwischen einem Losrad 50 und einem Kugellager angeordnet. Die Distanzscheibe 22 ist als abgesetzte Scheibe ausgebildet, deren Erhebung an einem Innenring 56 des Kugellagers anliegt, so dass zumindest zwischen dem Außenring 58 und der zweiten Seite 34 der Distanzscheibe 22 ein Zwischenraum eingerichtet ist.

Die Distanzscheibe 22 der Fig. 5 ist in Fig. 8 in einer Draufsicht gezeigt. Es ist zu erkennen, dass die Distanzscheibe 22 vier über den Umfang verteilte Vertiefungen 28 aufweist. Die Vertiefungen 28 sind kreisförmig und sowohl vom Innenumfang 24 als auch vom Außenumfang 26 der Distanzscheibe 22 beabstandet. Wie es in Fig. 6 ferner gezeigt ist, können die Vertiefungen 28 auch länglich ausgebildet sein. Derartige längliche Ausnehmungen können beispielsweise radial ausgerichtet sein, wie es bei 28' gezeigt ist. Ferner können die länglichen Ausnehmungen auch in Umfangsrichtung ausgerichtet sein, wie es bei 28" gezeigt ist.

Fig. 9 zeigt eine alternative Ausführungsform einer Distanzscheibe 22. Die Distanzscheibe 22 weist eine einzelne Vertiefung 28''' auf, die konzentrisch zu der Distanzscheibe 22 als Ringvertiefung ausgebildet ist.

Eine weitere alternative Ausführungsform einer erfindungsgemäßen Distanzscheibe ist in Fig. 10 gezeigt. Die Distanzscheibe 22 der Fig. 10 weist eine Mehrzahl von radial verlaufenden Vertiefungen 28^{IV} auf, die sich vom Innenumfang 24 zum Außenumfang 26 erstrecken. Die Vertiefungen 28^{IV} können dabei in der Draufsicht konisch auseinanderlaufend geformt sein, wie es in Fig. 10 dargestellt ist.

Fig. 11 zeigt eine abgesetzte Distanzscheibe 22^{V}, wie sie beispielsweise in dem Getriebe der Fig. 7 verwendet wird. Die Ringvertiefung 28^{V} ist hierbei im Bereich des Innenumfanges 24 der Distanzscheibe 22^{V} angeordnet.

Obgleich in den obigen Figuren Ausführungsformen von Distanzscheiben 22 dargestellt sind, bei denen eine oder mehrere Vertiefungen 28 von einer Seite 30 in die Distanzscheibe 22 eingedrückt sind, so dass sich auf der gegenüberliegenden Seite 34 Erhebungen 32 ergeben, ist es alternativ auch möglich, derartige Vertiefungen 28 von beiden Seiten einzudrücken, so dass die Gesamtdicke der Distanzscheibe 22 sich ergibt durch die Distanz zwischen den Erhebungen 32 auf den gegenüberliegenden Seiten. Im Rahmen der vorliegenden Anmeldung kann die erste Seite 30 der Distanzscheibe 22 folglich ohne oder mit Erhebungen 32 ausgebildet sein. Im letzteren Fall bilden die Erhebungen 32 die erste Seite 30.

## Patentansprüche

1. Verfahren zum Herstellen einer Getriebe-Distanzscheibe (22) mit einer vorbestimmten Dicke (D_{S}), mit den Schritten, eine Rohscheibe (14) bereitzustellen und anschließend zum Herstellen der Distanzscheibe (22) zu bearbeiten, damit die Distanzscheibe (22) die vorbestimmte Dicke (Dₛ) erhält,
wobei die Rohscheibe (14) eine geringere Dicke (D_{R}) als die vorbestimmte Dicke (D_{S}) aufweist, wobei wenigstens von einer Seite (30) in die Rohscheibe (14) wenigstens eine axiale Vertiefung (28) eingedrückt wird, die gegenüber der anderen Seite (34) als Erhebung (32) vorsteht, derart, dass die Distanz (D_{Z}) zwischen der einen Seite (30) der Distanzscheibe (22) und der Erhebung (32) auf der anderen Seite (34) der Distanzscheibe (22) mindestens der vorbestimmten Dicke (D_{S}) entspricht, und
wobei die Rohscheibe (14) nach dem Eindrücken der wenigstens einen axialen Vertiefung (28) einem axialen Pressvorgang unterzogen wird, damit die Distanz zwischen der einen Seite (30) der Distanzscheibe (22) und der Erhebung (32) auf der anderen Seite (34) der Distanzscheibe (22) genau der vorbestimmten Dicke (D_{S}) entspricht.

2. Verfahren nach Anspruch 1, wobei in dem Bearbeitungsschritt eine Mehrzahl von Vertiefungen (28) eingedrückt werden.

3. Verfahren nach Anspruch 2, wobei die Vertiefungen (28'; 28"; 28^{IV}) über den Umfang der Distanzscheibe (22) verteilt angeordnet sind.

4. Verfahren nach einem der Ansprüche 1 bis 3, wobei wenigstens eine Vertiefung (28'; 28"; 28''') von einem Innenumfang (24) und/oder von einem Außenumfang (26) der Distanzscheibe (22) beabstandet angeordnet ist.

5. Verfahren nach einem der Ansprüche 1 bis 4, wobei wenigstens eine Vertiefung (28^{IV}) sich in radialer Richtung von einem Innenumfang (24) bis zu einem Außenumfang (26) der Distanzscheibe (22) erstreckt.

6. Verfahren nach einem der Ansprüche 1 bis 5, wobei die Rohscheibe (14) bereitgestellt wird, indem sie aus einem Blech (10) ausgestanzt wird.

7. Getriebe-Distanzscheibe (22) mit wenigstens einer axialen Vertiefung (28), die an einer Seite (30) ausgebildet ist, **dadurch gekennzeichnet, dass** die wenigstens eine axiale Vertiefung (28) gegenüber der anderen Seite (34) als Erhebung (32) vorsteht, wobei eine vorbestimmte Dicke (Ds) der Distanzscheibe (22) durch die Distanz zwischen der einen Seite (30) der Distanzscheibe (22) und der Erhebung (32) auf der anderen Seite (34) der Distanzscheibe (22) gebildet ist, wobei die Distanzscheibe (22) durch ein Verfahren gemäß einem der Ansprüche 1 bis 6 hergestellt ist.

8. Getriebe (40) mit einer Welle (42), an der eine Distanzscheibe (22) nach Anspruch 7 angeordnet ist.

9. Verwendung einer Distanzscheibe (22) nach Anspruch 7 in einem Kraftfahrzeuggetriebe.

## Claims

1. Method for fabricating of a gear box spacer washer (22) with a predetermined thickness (D_{S}), with the steps: providing a raw disc (14) and subsequently tooling the raw disc (14) for fabrication of the spacer washer (22), thereby giving the spacer washer (22) the predetermined thickness (D_{S}),
wherein the raw disc (14) has a thickness (D_{R}) less than the predetermined thickness (D_{S}), wherein at least from one side (30) at least one axial recess is impressed into the raw disk (14), which protrudes with respect to the other side (34) as protrusion (32), such that the distance (D_{Z}) between the one side (30) of the spacer washer (22) and the protrusion (32) on the other side (34) of the spacer washer (22) corresponds at least to the predetermined thickness (D_{S}), and
wherein the raw disc (14), after the depression of the at least one axial recess (28), is subject to an axial pressing process, such that the distance between the one side (30) of the spacer washer (22) and the protrusion (32) on the other side (34) of the spacer washer (22) exactly corresponds to the predetermined thickness (D_{S}).

2. Method according to claim 1, wherein in the tooling step a plurality of recesses (28) is impressed.

3. Method according to claim 2, wherein the recesses (28'; 28"; 28^{IV}) are distributed over the circumference of the spacer washer (22).

4. Method according to one of the claims 1 to 3, wherein at least one recess (28'; 28"; 28''') is spaced apart from an inner circumference (24) and/or from an outer circumference (26) of the spacer washer (22).

5. Method according to one of claims 1 to 4, wherein at least one recess (28^{IV}) extends in radial direction from an inner circumference (24) to an outer circumference (26) of the spacer washer (22).

6. Method according to one of claims 1 to 5, wherein the raw disc (14) is provided by punching it from a metal sheet (10).

7. Spacer washer (22) for a gear box, the spacer washer (22) having at least one axial recess (28) being provided on one side (30), **characterized in that** the at least one axial recess (28) protrudes with respect to the other side (34) as a protrusion (32), wherein a predetermined thickness (D_{S}) of the spacer washer (22) is defined by the distance between the one side (30) of the spacer washer (22) and the protrusion (32) on the other side (34) of the spacer washer (22), wherein the spacer washer (22) is fabricated by a method according to one of claims 1 to 6.

8. Gear box (40) with a shaft (42) on which a spacer washer (22) according to claim 7 is arranged.

9. Use of a spacer washer (22) according to claim 7 in a vehicle gear box.

## Revendications

1. Procédé de fabrication d'une rondelle d'écartement pour transmission (22) comprenant une épaisseur prédéterminée (D_{S}), comprenant les étapes consistant à fournir une rondelle brute (14) et suite à la fabrication de la rondelle d'écartement (22), à l'usiner afin que la rondelle d'écartement (22) acquière l'épaisseur prédéterminée (D_{S}),
la rondelle brute (14) présentant une plus faible épaisseur (D_{R}) que l'épaisseur prédéterminée (D_{S}), au moins un renfoncement axial (28) étant imprimé au moins depuis un côté (30) dans la rondelle brute (14), lequel fait saillie par rapport à l'autre côté (34) sous forme de rehaussement (32) de telle sorte que la distance (D_{Z}) entre l'un des côtés (30) de la rondelle d'écartement (22) et le rehaussement (32) de l'autre côté (34) de la rondelle d'écartement (22) corresponde au moins à l'épaisseur prédéterminée (D_{S}), et
la rondelle brute (14), après l'impression de l'au moins un renfoncement axial (28), étant soumise à une opération de pressage axial afin que la distance entre l'un des côtés (30) de la rondelle d'écartement (22) et le rehaussement (32) de l'autre côté (34) de la rondelle d'écartement (22) corresponde exactement à l'épaisseur prédéterminée (D_{S}).

2. Procédé selon la revendication 1, dans lequel, dans l'étape d'usinage, une pluralité de renfoncements (28) sont imprimés.

3. Procédé selon la revendication 2, dans lequel les renfoncements (28' ; 28" ; 28^{IV}) sont répartis sur la périphérie de la rondelle d'écartement (22).

4. Procédé selon l'une quelconque des revendications 1 à 3, dans lequel au moins un renfoncement (28' ; 28" ; 28''') est disposé à distance d'une périphérie intérieure (24) et/ou d'une périphérie extérieure (26) de la rondelle d'écartement (22).

5. Procédé selon l'une quelconque des revendications 1 à 4, dans lequel au moins un renfoncement (28^{IV}) s'étend dans la direction radiale depuis une périphérie intérieure (24) jusqu'à une périphérie extérieure (26) de la rondelle d'écartement (22).

6. Procédé selon l'une quelconque des revendications 1 à 5, dans lequel la rondelle brute (14) est préparée par estampage à partir d'une tôle (10).

7. Rondelle d'écartement pour transmission (22) comprenant au moins un renfoncement axial (28) qui est réalisé d'un côté (30), **caractérisée en ce que** l'au moins un renfoncement axial (28) fait saillie par rapport à l'autre côté (34) sous forme de rehaussement (32), une épaisseur prédéterminée (D_{S}) de la rondelle d'écartement (22) étant formée par la distance entre l'un des côtés (30) de la rondelle d'écartement (22) et le rehaussement (32) de l'autre côté (34) de la rondelle d'écartement (22), la rondelle d'écartement (22) étant fabriquée par un procédé selon l'une quelconque des revendications 1 à 6.

8. Transmission (40) comprenant un arbre (42) sur lequel est disposée une rondelle d'écartement (22) selon la revendication 7.

9. Utilisation d'une rondelle d'écartement (22) selon la revendication 7 dans une transmission de véhicule automobile.
